# EUROPÄISCHE PATENTSCHRIFT

(11) **EP 3 050 727 B1**
(45) Veröffentlichungstag und Bekanntmachung des Hinweises auf die Patenterteilung: **17.02.2021**
(21) Anmeldenummer: 15201041.9
(22) Anmeldetag: 18.12.2015
(51) Int. Cl.: B60J 5/04, F16F 15/00, B60R 11/02

(54) **KRAFTFAHRZEUGTÜR**
MOTOR VEHICLE DOOR
PORTE DE VEHICULE AUTOMOBILE

(30) Priorität: 30.01.2015 DE 102015201626
(43) Veröffentlichungstag der Anmeldung: 03.08.2016
(73) Patentinhaber: Brose Fahrzeugteile GmbH & Co. Kommanditgesellschaft, Bamberg, 96052 Bamberg (DE)
(72) Erfinder: KRIESE, Olaf, 96450 Coburg (DE); MÜLLER, Joachim, 97440 Werneck (DE); SCHATKE, Silvio, 96250 Ebensfeld (DE)
(74) Vertreter: Maikowski & Ninnemann Patentanwälte Partnerschaft mbB

(56) Entgegenhaltungen:
- WO-A1-96/28314
- WO-A2-2014/096629
- DE-A1- 19 717 908
- DE-A1- 19 738 656
- DE-U1-202007 001 999
- DE-U1-202008 004 404
- US-A1- 2015 131 842

## Beschreibung

Die Erfindung betrifft eine Kraftfahrzeugtür gemäß dem Oberbegriff des Anspruchs 1.

In eine Kraftfahrzeugtür eingebaute Lautsprecher eines Informations- und Unterhaltungssystems (Sound- oder Audiosystem) sollen Tonfrequenzen mit optimaler Klangqualität in den Fahrzeuginnenraum abgeben werden, während die von ebenfalls in die Kraftfahrzeugtür eingebauten Antriebssystemen abgegebenen Störgeräusche bzw. Störsignale unterdrückt, zumindest aber minimiert werden sollen. Dabei sollen zur Gewährleistung einer hohen Lebensdauer die Funktionselemente einer Kraftfahrzeugtür wie Fensterheber, Zentralverriegelung, Lautsprecher und dergleichen vor Feuchtigkeit geschützt werden. Zu diesem Zweck wird eine Kraftfahrzeugtür durch ein Türaußenblech, ein Türinnenblech und eine auf dem Türinnenblech befestigte Trägerplatte, insbesondere die Trägerplatte eines Türmoduls, und eine die Trägerplatte zum Fahrzeuginnenraum abdeckende Türinnenverkleidung gebildet. Das Türaußenblech einerseits sowie das Türinnenblech und die Trägerplatte andererseits schließen zwischen sich einen Nassraum ein, während zwischen dem Türinnenblech und der Trägerplatte einerseits und der Türinnenverkleidung andererseits ein Trockenraum ausgebildet ist, in dem die feuchtigkeitsempfindlichen Funktionselemente der Kraftfahrzeugtür angeordnet sind. Die sowohl von den geräuscherzeugenden Funktionselementen oder Aggregaten abgegebenen Störgeräusche in Form von Körperschall und Luftschall als auch die vom Lautsprecher eines Audiosystems abgegebenen Tonfrequenzen werden jedoch gleichermaßen in den Fahrzeuginnenraum abgestrahlt und führen zu einer unbefriedigenden Akustik im Fahrzeuginnenraum.

Aus der DE 19717908 A1 ist ein Türseitenteil für eine Fahrzeugtür bekannt, das zur Verbesserung der Stabilität der Fahrzeugtür insbesondere in Bezug auf einen Seitenaufprallschutz sowie zur Schaffung optimaler Bedingungen für die Klangausbreitung eines in das Türseitenteil eingebauten Lautsprechers eine Materialausstellung aufweist, die als geschlossener Resonanzraum für den Lautsprecher ausgebildet ist. Eine direkte Verbindung des Resonanzraumes mit den in die Kraftfahrzeugtür eingebauten geräuscherzeugenden Aggregaten ist nicht vorgesehen, so dass zwar in Verbindung mit einer Erhöhung des Seitenaufprallschutzes die Klangqualität des Soundsystems verbessert wird, die von den geräuscherzeugenden Aggregaten als Körper- und Luftschall abgegebenen Störgeräusche jedoch weitestgehend ungedämpft in den Fahrzeuginnenraum gelangen und dadurch zu einer Verschlechterung der Akustik im Fahrzeuginnenraum führen.

Aus der US 5 537 782 A ist es bekannt, einen in eine Kraftfahrzeugtür eingebauten Fensterhebermotor zur Geräuschdämmung und zum Schutz vor Witterungseinflüssen in ein Gehäuse einzukapseln. Dadurch wird zwar eine Dämpfung der vom Fensterhebermotor abgegebenen Geräusche erzielt, eine Verbesserung der Klangqualität eines in die Kraftfahrzeugtür eingebauten Lautsprechers kann jedoch entsprechend der WO 96/28314 nur dadurch erzielt werden, dass der Lautsprecher in ein als Resonanzraum dienendes Gehäuse eingebaut wird. Dies führt jedoch zu einem erheblichen Aufwand und stößt sowohl bezüglich der Kapselung geräuscherzeugender Aggregate zur Dämpfung von Störgeräuschen einerseits als auch zur Verbesserung der Klangqualität von Soundsystemen durch die Anordnung von Lautsprechergehäusen an Grenzen in dem beengten Bauraum einer Kraftfahrzeugtür. Darüber hinaus ist bei der Kapselung geräuscherzeugender Aggregate eine hinreichende Wärmeabfuhr beim Betrieb der Aggregate zu berücksichtigen, um eine Überhitzung der Aggregate und damit deren Funktionsausfall zu vermeiden.

Aus der WO 2014/096629 A2 ist eine Kraftfahrzeugtür bekannt, in deren Türschacht eine einstückige Anordnung einer Lautsprecheraufnahme, der Führungsschienen eines Fensterhebers und eines Seitenaufprallträger vorgesehen ist. Zur verbesserten Wiedergabe tiefer Tonfrequenzen des mit der Lautsprecheraufnahme verbundenen Lautsprechers ist eine rohrförmige Akustikkammer zwischen dem Seitenaufprallträger und der Lautsprecheraufnahme angeordnet. Eine Verbindung des geräuscherzeugenden Fensterheber Antriebs mit der Akustik, ist jedoch ebenfalls nicht vorgesehen.

Aus der DE 197 38 656 A1 ist eine Fahrzeugtür mit einem Türaußenblech und einem Türinnenblech mit einem großflächigen Ausschnitt bekannt, der von einer Trägerplatte dichtend abgedeckt ist, so dass die Türkarosserie in einen zwischen dem Türaußenblech und derTrägerplatte liegenden Naßraum und einen zwischen derTrägerplatte und einer sich daran anschließenden Türinnenverkleidung liegenden Trockenraum aufgeteilt ist. In dem Trockenraum sind elektrische und/oder elektronische Komponenten wie ein Fensterheberantrieb, Schaltelemente und Lautsprecher auf der Trägerplatte vormontiert angeordnet, wobei der Trockenraum zwischen der Trägerplatte und der Türinnenverkleidung gleichzeitig einen Resonanzraum für die Lautsprecher ausbildet, in dem auch der Elektromotor des Fensterheberantriebs angeordnet ist. Die Türinnenverkleidung weist zusätzlich Schallaustrittsöffnungen für die mit der Trägerplatte verbundenen Lautsprecher auf.

Aus der US 2015/131842 A1 ist eine Vorrichtung zum Verändern der Ausrichtung eines Lautsprechers bekannt, die eine Lautsprechereinheit, ein die Lautsprechereinheit tragendes erstes Gehäuse, ein das erste Gehäuse aufnehmendes zweites Gehäuse und zwei Drehvorrichtungen aufweist, von denen eine erste Drehvorrichtung die Lautsprechereinheit in Bezug auf das erste Gehäuse dreht, während die zweite Drehvorrichtung die Lautsprechereinheit zusammen mit dem ersten Gehäuse in Bezug auf das zweite Gehäuse mittels eines elektromotorischen Antriebs verstellt.

Aufgabe der vorliegenden Erfindung ist es, die Akustik im Innenraum eines Kraftfahrzeugs durch eine Verbesserung der Klangqualität von Lautsprechern eines Soundsystems bei gleichzeitiger Verringerung der von in die Kraftfahrzeugtür eingebauten geräuscherzeugenden Aggregaten als Körper- und Luftschall abgegebenen Störgeräusche unter Berücksichtigung des thermischen Managements der geräuscherzeugenden Aggregate zu erzielen.

Diese Aufgabenstellung wird erfindungsgemäß durch die Merkmale des Anspruchs 1 gelöst.

Die erfindungsgemäße Lösung führt zu einer wesentlichen Verbesserung der Akustik im Innenraum eines Kraftfahrzeugs, indem einerseits die Klangqualität der Lautsprecher eines Soundsystems durch die Schaffung eines Resonanzraumes verbessert wird, andererseits aber eine Übertragung der von geräuscherzeugenden Aggregaten abgegebenen Störgeräusche in den Fahrzeuginnenraum aber unterdrückt wird, ohne dass die Gefahr einer thermischen Überlastung der geräuscherzeugenden Aggregate besteht, wobei der Resonanzraum von einer Soundbox mit einer ersten Gehäuseschale, die Teil der Türinnenhaut oder der Abdeckung ist, und einer den Lautsprecher aufnehmenden, mit der ersten Gehäuseschale verbindbaren zweiten Gehäuseschale umgeben ist.

Die insbesondere topfförmige Ausbildung der zweiten Gehäuseschale mit einer Bodenfläche und einer von dieser senkrecht abstehenden, teilweise umlaufenden Seitenfläche und deren Verbindung mit der Türinnenhaut und/oder Abdeckung derart, dass der offene Seitenflächenbereich der zweiten Gehäuseschale durch einen Teil der als erste Gehäuseschale ausgebildeten Türinnenhaut und/oder Abdeckung gebildet wird, schafft eine platz- und materialsparende Ausbildung des Resonanzraumes bei gleichzeitig hoher Stabilität auch bei Verwendung dünner Materialien infolge der Sandwich-Bauweise der Soundbox.

Durch die Aufteilung der Soundbox in zwei Gehäuseschalen ist eine Variantenerzeugung im Soundsystem möglich, da nur die zweite Gehäuseschale separat hergestellt und montiert werden muss. Gleichzeitig ist durch die Integration eines Teils der ersten Gehäuseschale in die zweite Gehäuseschale eine Gewichtsersparnis erzielt. Insgesamt wird eine bessere Klangqualität des Soundsystems erzielt, indem weniger Verzerrungen und ein klarerer Klang durch geringe Anregung unerwünscht mitschwingender Flächen, eine geringere Welligkeit des Frequenzgangs und eine verstärkte unabhängige Bassanhebung durch eine Bassreflexabstimmung der Soundbox erzielt wird.

Die Anordnung zumindest von geräuscherzeugenden Teilen eines geräuscherzeugenden Aggregats im Resonanzraum des Lautsprechers erscheint wegen der zu vermutenden negativen Auswirkung einer Störschallquelle auf die akustischen Eigenschaften des Resonanzraumes zunächst kontraproduktiv. Da aber die vom geräuscherzeugenden Aggregat abgestrahlten Schallfelder im Resonanzraum "gefangen sind" und somit überwiegend nur über die durch den Lautsprecher bewirkte Schnittstelle zum Fahrzeuginnenraum definiert wirken, so dass sie genauer und einfacher detektiert und analysiert werden können, wird eine Manipulation der Störsignale erheblich erleichtert, indem diese im Resonanzraum gedämmt werden und nur noch über die Lautsprechermembran austreten können. Diese positive Wirkung tritt sowohl bei einem aktiven als auch bei einem nicht aktiven Lautsprecher auf.

Die Anordnung sowohl eines Lautsprechers als auch der geräuscherzeugenden Teile von geräuscherzeugenden Aggregaten in einem geschlossenen Resonanzraum gewährleistet somit einerseits eine Verbesserung der Klangqualität des Lautsprechers infolge der den Resonanzraum umschließenden Soundbox und andererseits eine Dämpfung von Störgeräuschen geräuscherzeugender Aggregate durch die Kapselung des Resonanzraumes, wobei ein hinreichend großer Resonanzraum sowohl die Klangqualität des Lautsprechers als auch das thermische Management geräuscherzeugender Aggregate und die Unterdrückung von Störgeräuschen positiv beeinflusst. Auch die Anordnung dämpfender Materialien in dem Resonanzraum führt sowohl zur weiteren Dämpfung der von den geräuscherzeugenden Aggregaten abgegebenen Störgeräusche als auch zur Verbesserung der Klangqualität des Lautsprechers durch die Dämpfung von Eigen- und Resonanzschwingungen.

Die vorstehend beschriebenen Merkmale bewirken somit durch Bereitstellung eines Resonanzraumes für den Lautsprecher nicht nur eine bessere Klangqualität des Sound- oder Audiosystems, sondern auch eine Kapselung der Luftschallübertragung des geräuscherzeugenden Aggregates, wobei die Soundbox einerseits zumindest den geräuscherzeugenden Teil eines geräuscherzeugenden Aggregats umschließt und andererseits als Aufnahme für den Lautsprecher bei gleichzeitiger Bereitstellung eines Bassreflexsystems dient. Diese passiven Maßnahmen wirken bezogen auf das geräuscherzeugende Aggregat als Luftschallsperre, indem Luftschall ausschließlich über den Lautsprecher in den Fahrzeuginnenraum abgestrahlt wird.

Durch die zusätzliche Anordnung von Mitteln zur akustischen und/oder thermischen Beeinflussung der geräuscherzeugenden Aggregate kann die mit der erfindungsgemäßen Lösung der gemeinsamen Anordnung eines Lautsprechers und der geräuscherzeugenden Aggregate in einem geschlossenen Resonanzraum erzielbare Verbesserung der Akustik im Fahrzeuginnenraum weiter optimiert werden.

Nach einem weiteren Merkmal der erfindungsgemäßen Lösung ist der Resonanzraum derart abgedichtet, dass ein Luftschall aus dem Resonanzraum ausschließlich über die Membran des Lautsprechers austreten kann, so dass die in dem Innenraum des Kraftfahrzeugs abgestrahlten Tonfrequenzen ausschließlich von den Schwingungen der Lautsprechermembran bestimmt werden, was Voraussetzung für die Bereitstellung eines aktiven Systems zur Geräuschkompensation und Schallfeldbeeinflussung ist.

Als weitere passive Maßnahme kann zur akustischen Dämpfung der vom geräuscherzeugenden Aggregate abgegebenen Störgeräusche und zur Verbesserung der Klangqualität des Lautsprechers im Resonanzraum ein Vlies angeordnet werden, das eine virtuelle Volumenvergrößerung des Resonanzraumes bewirkt.

Die Anordnung eines Vlieses im Resonanzraum hat bifunktionale akustische Wirkung, zum Einen für die Audioakustik, indem sowohl der Strömungswiderstand der Luft in der den Resonanzraum umschließenden Soundbox durch die Dämpfungserhöhung der schwingenden Luftmasse erhöht und damit der Effekt unterstützt wird, dass das Volumen der Soundbox virtuell vergrößert wird, und zum anderen, dass die Luftschallabsorption der vom geräuscherzeugenden Aggregat abgegebenen Störgeräusche verbessert wird, was zu einer höheren Luftschalldämmung außerhalb der Soundbox führt.

In weiterer Ausgestaltung der erfindungsgemäßen Lösung kann das passive System mit einem aktiven System unter Einsatz des Lautsprechers gekoppelt werden, mit dem ein den Störgeräuschen entgegen wirkendes Antischallfeld überlagert wird, so dass durch destruktive Interferenz die Störgeräusche ausgelöscht, zumindest aber verringert werden.

Dem entsprechend ist nach einem weiteren Merkmal der Erfindung der Lautsprecher als Gegenschallquelle zum geräuscherzeugenden Aggregat ausgebildet und ansteuerbar, wobei der Gegenschall in Bezug auf ein als elektromotorischer Antrieb ausgebildetes geräuscherzeugendes Aggregat in einem Frequenzbereich von ca. 80 - 3.000 Hz generiert wird.

Zur Ansteuerung des Lautsprechers als Gegenschallquelle kann als Sensor für das benötigte Gegenschallfeld der Lautsprecher selbst eingesetzt oder ein Mikrofon bzw. ein Sensor an einer geeigneten Stelle innerhalb oder außerhalb des Resonanzraumes im Fahrzeuginneren angeordnet werden, das bzw. der die Störgeräusche detektiert. Durch Ansteuerung des Lautsprechers in Abhängigkeit von dem vom Lautsprecher selbst oder vom Sensor detektierten Störgeräuschsignal können prägnante oder nur störende Frequenzen des geräuscherzeugenden Aggregats unterdrückt werden oder der Störgeräuschpegel wird breitbandig gesenkt.

Dem entsprechend ist der Lautsprecher in einer Sensorfunktion, in der die auszulöschenden, von dem geräuscherzeugenden Aggregat abgegebenen störenden Frequenzen mit den zugehörigen Amplituden erfasst werden, und in einer Aktuatorfunktion aktivierbar, in der der Gegenschall vom Lautsprecher abgestrahlt wird.

Alternativ kann der Lautsprecher während des Betriebs des geräuscherzeugenden Aggregats derart angesteuert werden, dass er ein den Gesamtklang beeinflussendes, insbesondere überdeckendes oder ergänzendes Tonsignalspektrum abgibt, so dass durch gezielte Synthetisierung Störgeräusche bzw. störenden Frequenzen so verändert werden, dass ein Wohlklang entsteht oder die Störgeräusche in ein Frequenzspektrum umgesetzt werden, die einem Wunschklang entsprechen.

Des Weiteren kann ein Verdeckungseffekt eingesetzt werden, bei dem die akustisch störenden Frequenzen mit Hilfe des Lautsprechers durch entsprechende Ansteuerung des Lautsprechers so überdeckt werden, dass diese als nicht mehr störend wahrgenommen werden.

Für den Verdeckungs- oder Ergänzungseffekt des Lautsprechers ist nach einem Merkmal der Erfindung das Tonsignalspektrum des Lautsprechers in Abhängigkeit von - der Drehzahl des als elektromotorischer Antrieb ausgebildeten geräuscherzeugenden Aggregats,
- einem Sensorsignal, das das Frequenzspektrum und die Amplituden des vom geräuscherzeugenden Aggregat abgegebenen Störsignals erfasst,
- einem von einer Signaldatenbank insbesondere in Abhängigkeit von der Drehzahl eines elektromotorischen Antriebs abgerufenen Ansteuersignal oder
- von einem Signaldatengenerator, insbesondere einem Microcontroller, generierten Ansteuersignal
   steuerbar.

Alternativ oder zusätzlich zu den vorstehend angegebenen Maßnahmen zur Unterdrückung bzw. zur Reduzierung des vom geräuscherzeugenden Aggregat abgegebenen Luftschalls können auch aktive Maßnahmen zur Reduzierung des vom geräuscherzeugenden Aggregats abgegebenen Körperschalls vorgesehen werden.

Eine erste Maßnahme besteht in der Schaffung einer Akustikinsel bzw. eines Materialskeletts, indem das geräuscherzeugende Aggregat über Befestigungsbereiche an der Türinnenhaut und/oder Abdeckung angebunden ist, die mit Schlitzen, Durchbrüchen oder Ausschnitten versehen ist, die eine Weiterleitung des Körperschalls behindern oder dämpfen, wodurch umlaufend um das geräuscherzeugende Aggregat das Material der Türinnenhaut bzw. Abdeckung unterbrochen und in weiterer Ausgestaltung durch eine zweite elastische Komponente substituiert werden kann, die als Körperschallsperre dient, indem die Durchbrüche oder Schlitze beispielsweise mittels Polyurethanschaum verschlossen werden, der auch für einen Nass-Trockenraumdichtung genutzt wird.

In bevorzugter Ausbildung sind die Schlitze oder Durchbrüche zur weiteren Optimierung der Innenraumakustik frequenzspezifisch derart ausgebildet, dass die für eine Soundbox relevanten tiefen Tonfrequenzen zur Nutzung des Nassraums der Fahrzeugtür als Klangvolumen durchgelassen und der Durchgang höherer Tonfrequenzen zumindest behindert wird.

Zur Einbeziehung des Thermomanagements des geräuscherzeugenden Aggregats in die Maßnahmen zur Verbesserung der Innenraumakustik ist nach einem weiteren Merkmal der Erfindung der Lautsprecher zur Abgabe tiefster Tonfrequenzen im Infraschallbereich, insbesondere im Bereich zwischen 1 und 10 Hz, zur Erzeugung von Luftbewegungen, insbesondere zur konvektiven Kühlung eines als elektromotorischer Antrieb ausgebildeten geräuscherzeugenden Aggregats, ansteuerbar.

Bei dieser Ausgestaltung werden Pumpbewegungen des Lautsprechers zur Erzeugung von Luftbewegungen, insbesondere zum Durchpumpen von Luft im Infraschallbereich von 1 bis 10 Hz zur Erzeugung eines Konvektionsstromes genutzt.

Zur weiteren Optimierung des Thermomanagements können Mittel zur Erzeugung einer gerichteten Konvektionsströmung, innerhalb der das geräuscherzeugende Aggregat positioniert wird, vorgesehen werden, indem in der Soundbox ein Strömungskanal mit einer Zuströmöffnung und einer Abströmöffnung für eine Konvektionsstörung bzw. einen Luftaustausch mit der Umgebung des Resonanzraumes angeordnet wird, wobei die Zuströmöffnung und die Abströmöffnung in weiterer Ausgestaltung durch Verschlusselemente abdeckbar sind.

Aufgrund der vertikalen Anordnung der Türinnenhaut bzw. Abdeckung und damit des Resonanzraum-Gehäuses wird bei einem entsprechend vertikal geführten Strömungskanal ein Kamineffekt erzeugt, bei dem über die Zuströmöffnung Kühlluft zugeführt und über die Abströmöffnung erwärmte Luft abgeführt wird.

Vorzugsweise sind die Verschlusselemente in einem definierten Infraschall-Frequenzbereich zwischen einer Auf-/Zu-Position bewegbar bzw. verstellbar und bleiben oberhalb des Infraschall-Frequenzbereichs insbesondere infolge ihrer Eigenfrequenz oder Massenträgheit geschlossen.

In weiterer Ausgestaltung sind die Verschlusselemente in Richtung ihrer Verschlusspositionen, insbesondere durch als integraler Bestandteil der Verschlusselemente ausgebildete, elastische Mittel oder infolge der Schwerkraft vorgespannt.

Eine weitere passive Maßnahme zur Verbesserung der Akustik im Fahrzeuginnenraum besteht in der Anordnung eines Bassreflexrohres in der zweiten Gehäuseschale der Soundbox, das ein den Resonanzraum mit dem den Resonanzraum umgebenden Außenraum verbindet und mindestens eine weitere als Zu- und/oder Abströmöffnung dienende Reflexrohröffnung aufweist, in deren Strömungsbereich das insbesondere als elektromotorischer Antrieb ausgebildete geräuscherzeugende Aggregat angeordnet ist.

Insbesondere kann das Bassreflexrohr als Teslaventil, d.h. als passives, fluidisches Ventil ausgebildet werden, bei dem der Luftströmungswiderstand in der einen Flussrichtung geringer ist als in der entgegengesetzten Richtung, so dass eine gerichtete Luftströmung von der Außenöffnung zur Innenöffnung des Teslaventils und von dort über das geräuscherzeugende Aggregat zur Abströmöffnung der Soundbox erzielt wird, die vorzugsweise mit einem beweglichen Verschlusselement versehen ist.

Um die Stabilität der Anordnung des geräuscherzeugenden Aggregats auf einem insbesondere aus Kunststoff hergestellten Aggregateträger zu erhöhen, werden nach einem weiteren Merkmal der Erfindung zwischen der Türinnenhaut und/oder der Abdeckung und der den Lautsprecher aufnehmenden zweiten Gehäuseschale der Soundbox mechanische Bereiche oder Elemente zur Abstützung von Kräften angeordnet, die bei Überschreitung einer vorgegebene Antriebskraft Stützkräfte übertragen und eine weitere Deformation bzw. Auslenkung des elastischen Anbindungsbereichs des als elektromotorischer Antrieb ausgebildeten geräuscherzeugenden Aggregats zumindest reduzieren.

Vorzugsweise sind die mechanischen Bereiche oder Elemente als eine von der Türinnenhaut und/oder Abdeckung abstehende Stützrippe ausgebildet, in deren der Kontur beispielsweise eines Poltopfes eines Elektromotors des elektromotorischen Antriebs angepasster Aufnahme ein Dämpfungselement eingelegt ist, zwischen dem und dem elektromotorischen Antrieb bei unbelastetem oder gering belastetem elektromotorischen Antrieb ein Spalt ausgebildet ist, während bei einer Belastung des elektromotorischen Antriebs oberhalb einer vorgegebene Antriebskraft die Kontur des elektromotorischen Antriebs am Dämpfungselement anliegt.

Durch diese konstruktive Maßnahme wird verhindert, dass vom geräuscherzeugenden Aggregat im Betrieb abgegebener Körperschall über die Soundbox in den Fahrzeuginnenraum übertragen wird.

Anhand mehrerer in der Zeichnung dargestellter Ausführungsbeispiele sollen das Grundprinzip sowie daraus ableitbare Varianten der erfindungsgemäßen Lösung näher erläutert werden. Es zeigen:
- Fig. 1 und 2: eine perspektivische Darstellung und eine Explosionsdarstellung einer Trägerplatte eines Türmoduls und eines durch eine Soundbox abgeschlossenen Resonanzraumes mit darin angeordnetem geräuscherzeugenden elektromotorischen Antrieb und Lautsprecher eines Audiosystems;
- Fig. 3: eine Explosionsdarstellung der Trägerplatte und der Soundbox gemäß den Fig. 1 und 2 mit im Resonanzraum angeordnetem Akustikvlies;
- Fig. 4: eine Draufsicht auf die Trägerplatte und die Soundbox gemäß Fig. 3 im zusammengebauten Zustand;
- Fig. 5: eine Längsschnitt durch die Trägerplatte und Soundbox entlang der Linie V-V gemäß Fig. 4;
- Fig. 6 und 7: Draufsichten auf einen auf einer Trägerplatte angeordneten elektromotorischen Antrieb mit in der Trägerplatte angeordneten Schlitzen und Durchbrüchen zur Dämpfung der Übertragung von Körperschall;
- Fig. 8: eine Innenansicht der einen Teil der Soundbox bildenden zweiten Gehäuseschale mit darin ausgebildetem Strömungskanal für eine Konvektionsströmung zur Kühlung eines elektromotorischen Antriebs;
- Fig. 9 bis 16: verschiedene Ansichten der Soundbox mit an der umlaufenden Seitenfläche der Soundbox angeordneten Strömungsventilen zur Erzeugung eines Luftaustauschs;
- Fig. 17 bis 27: verschiedene Ansichten der mit einem Bassreflexrohr versehenen Soundbox mit einer Belüftungsfunktion durch Interaktion zwischen der Lautsprechermembran, dem Bassreflexrohr und an der umlaufenden Seitenfläche der Soundbox angeordneten Strömungsventilen und
- Fig. 28 bis 35: verschiedene Ansichten und Schnitte der Soundbox mit darin angeordneter Rippe mit Dämpfer zur Aufnahme der Stützkräfte durch temporäre Anlage eines elektromotorischen Antriebs.

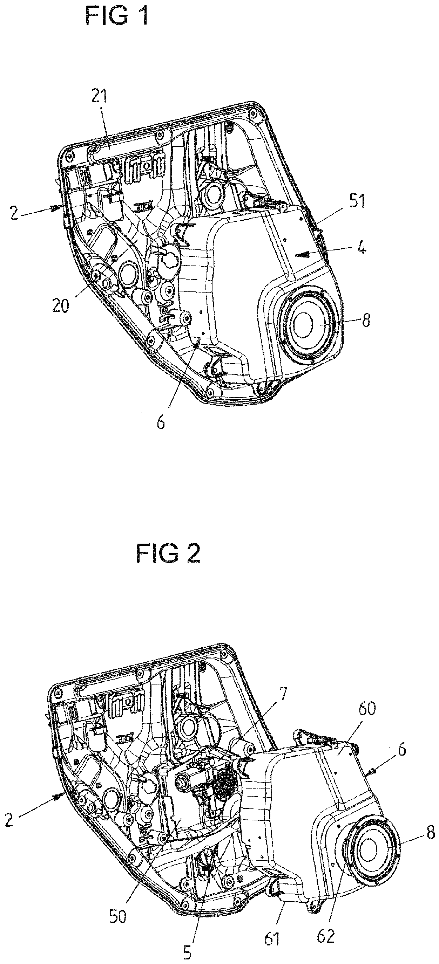

Fig. 1 zeigt in perspektivischer Darstellung und Fig. 2 in einer Explosionsdarstellung eine Trägerplatte 2 eines Türmoduls, die einen Ausschnitt in der Türinnenhaut einer Kraftfahrzeugtür abdeckt und eine Bodenfläche 20 und eine zumindest teilweise um den Rand der Bodenfläche 20 umlaufende, senkrecht von der Bodenfläche 20 abstehende Seitenfläche 21 aufweist. Auf der Bodenfläche 20 sind mehrere Funktionselemente oder Aggregate für verschiedene Türfunktionen wie Fensterheber, Türschloss, Türzuziehvorrichtung und dergleichen angeordnet. Als Beispiel hierfür ist in der Explosionsdarstellung gemäß Fig. 2 ein elektromotorischer Antrieb für einen Fensterheber dargestellt.

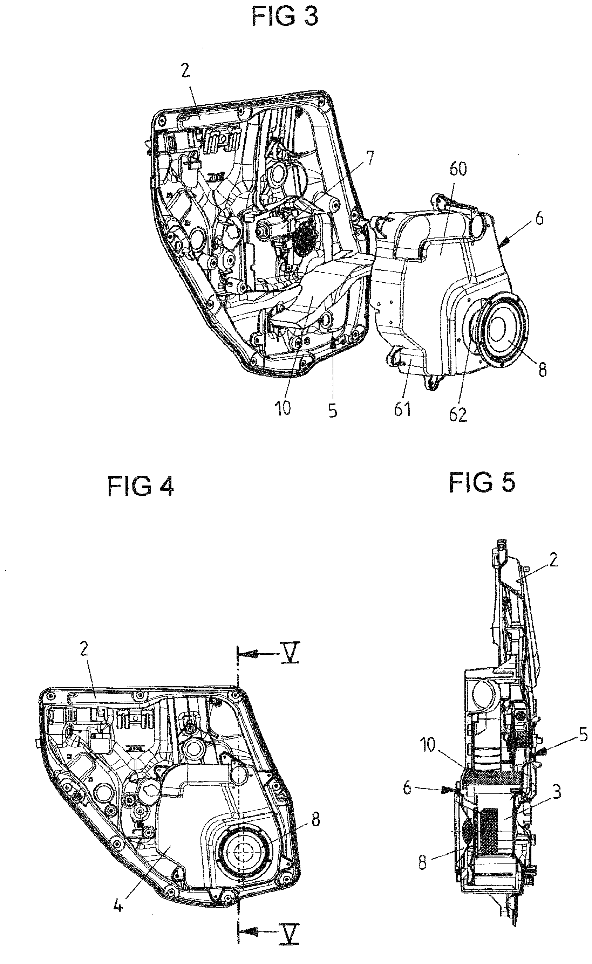

Ein in einem Längsschnitt gemäß Fig. 5 bezeichneter Resonanzraum 3 ist von einer Soundbox 4 aus zwei Gehäuseschalen 5, 6 abgeschlossen, von denen eine erste Gehäuseschale 5 durch einen Teil 50 der Bodenfläche 20 sowie ein Teil 51 der Seitenfläche 21 der Trägerplatte und eine zweite Gehäuseschale 6 mit einer Deckfläche 60 und einer senkrecht von der Deckfläche 60 abstehenden Seitenfläche 61 gebildet wird. In die Deckfläche 60 der zweiten Gehäuseschale 6 ist in eine Öffnung 62 der Deckfläche 60 ein Lautsprecher 8 eingesetzt, während der elektromotorische Antrieb 7 mit der Bodenfläche 50 der ersten Gehäuseschale 5 verbunden ist. Durch die Soundbox 4, d.h. durch die Verbindung der zweiten Gehäuseschale 6 mit der ersten Gehäuseschale 5 mittels an der zweiten Gehäuseschale 6 angeordneten Soundboxbefestigungen 63, wird der Resonanzraum 3 definiert, in dem der im Betrieb geräuscherzeugende elektromotorische Antrieb 7 und der Lautsprecher 8 angeordnet sind.

Durch die Anordnung des Lautsprechers 8 in der zweiten Gehäuseschale 6 und die Kapselung des im Betrieb geräuscherzeugenden elektromotorischen Antriebs 7 innerhalb des von der Soundbox 4 umschlossenen Resonanzraumes 3 wird einerseits die Klangqualität des Lautsprechers 8 verbessert und andererseits infolge einer Abdichtung der Verbindung zwischen den Gehäuseschalen 5, 6 bewirkt, dass Luftschall ausschließlich über die Membran des Lautsprechers 8 in den Innenraum des Kraftfahrzeugs abgegeben wird. Durch diese passive, klangverbessernde und gleichzeitig störgeräuschreduzierende Maßnahme wird bereits eine deutliche Verbesserung der Akustik im Innenraum eines Kraftfahrzeugs erzielt. Dabei ist gleichzeitig durch die Größe des Resonanzraumes 3 sichergestellt, dass einerseits die Bassreflexwirkung des Resonanzraumes 3 zur Klangverbesserung des Lautsprechers 8 deutlich verbessert und andererseits die vom elektromotorischen Antrieb 7 im Betrieb abgegebene Wärme vom Resonanzraum aufgenommen wird.

Als weitere passive Maßnahme zur Verbesserung der Akustik im Innenraum eines Kraftfahrzeugs kann gemäß Fig. 3 ein Akustikvlies 10 im Resonanzraum 3 zur akustischen Dämpfung der unerwünschten, vom geräuscherzeugenden elektromotorischen Antrieb 7 abgegebenen Störgeräusche und andererseits eine akustische Verbesserung der Klangqualität des Lautsprechers 8 durch eine virtuelle Volumenvergrößerung des Resonanzraumes 3 erzielt werden. Alternativ oder zusätzlich kann ein Akustikvlies auch gleichmäßig homogen über das Innenvolumen des Resonanzraumes 3 verteilt angeordnet werden.

Zusätzlich zu den vorstehend beschriebenen passiven Maßnahmen zur Verbesserung der Akustik im Innenraum eines Kraftfahrzeugs können die passiven Maßnahmen mit einem aktiven System ergänzt werden, bei dem der Lautsprecher 8 derart angesteuert wird, dass die vom geräuscherzeugenden Aggregat 7 abgegebenen Störgeräusche eliminiert, zumindest aber verringert werden, während die Klangqualität des die Endstufe eines Audiosystems bildenden Lautsprechers 8 weiter verbessert wird.

Zu diesem Zweck wird der Lautsprecher 8 derart ausgebildet und mittels einer Ansteuerelektronik derart angesteuert, dass er in Bezug auf die vom geräuscherzeugenden elektromotorischen Aggregat 7 abgegebenen Störgeräusche als Gegenschallquelle dient, wobei der Gegenschall beispielsweise in Bezug auf einen Elektromotor eines Fensterheberantriebs in einem Frequenzbereich von ca. 50 bis 3.000 Hz generiert wird.

Die für ein aktives System erforderliche Erfassung der Störsignale kann durch den Lautsprecher 8 selbst bewirkt werden, indem eine Sensorfunktion des Lautsprechers 8 aktiviert wird, bei der die auszulöschenden Frequenzen mit zugehörigen Amplituden erfasst und der Lautsprecher 8 anschließend in einer Aktuatorfunktion aktiviert wird, in der ein die Störfrequenzen auslöschender oder minimierender Gegenschall zur destruktiven Interferenz mit den Störsignalen abgestrahlt wird.

Alternativ können die Störsignale über ein Mikrofon bzw. Akustiksensor an geeigneter Stelle innerhalb oder außerhalb des Resonanzraumes 3 detektiert werden. Bei beiden Varianten können prägnante oder nur störende Frequenzen des geräuscherzeugenden elektromotorischen Aggregats 7 unterdrückt oder breitbandig die Pegel bzw. Amplituden der Störsignalfrequenzen gesenkt werden.

Eine weitere Möglichkeit besteht darin, ein Überdeckungs- oder Ergänzungssignal des Lautsprechers 8 in Abhängigkeit von der Motordrehzahl, einem Sensorsignal, einem aus einer Signaldatenbank abgerufenen oder von einem Signaldatengenerator generiertem Signal so zu überdecken, dass das Gesamtsignal im Innenraum des Kraftfahrzeugs nicht mehr als störend wahrgenommen wird.

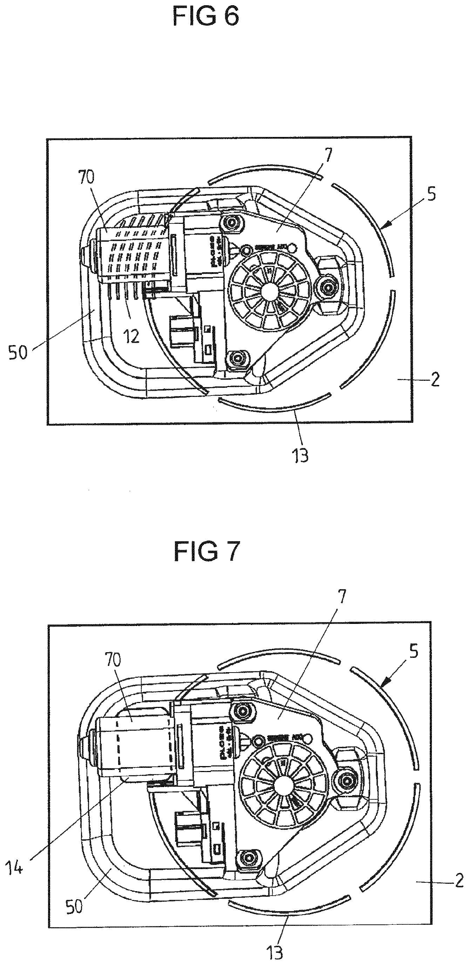

Eine weitere passive Maßnahme zur Unterdrückung bzw. Eliminierung von Störgeräuschen bei gleichzeitiger Verbesserung der Klangqualität des Lautsprechers 8 eines Sound- oder Audiosystems besteht gemäß den schematischen Darstellungen der Fig. 6 und 7 darin, Schlitze 12, 13 in der Bodenfläche 50 des als erste Gehäuseschale 5 ausgebildeten Teils der Türinnenhaut bzw. des Trägerteils eines Türmoduls gemäß Fig. 6 oder einen Ausschnitt 14 unmittelbar am geräuscherzeugenden Poltopf 70 des elektromotorischen Antriebs 7 anzuordnen. Durch die Anordnung von Schlitzen 12, 13 oder einem Durchbruch bzw. Ausschnitt 14 in der ersten Gehäuseschale 5 im Bereich der Anbindung des geräuscherzeugenden elektromotorischen Aggregats 7 wird die Weiterleitung von Körperschall des geräuscherzeugenden Aggregats 7 behindert bzw. gedämpft und gleichzeitig bewirkt, dass durch geeignete Dimensionierung der Schlitze 12, 13 bzw. Durchbrüche oder Ausschnitte 14 die für eine Bassreflexbox relevanten Frequenzen durchgelassen werden, so dass auch der auf der anderen Seite der Trägerplatte bzw. Türinnenhaut 2 befindliche Nassraum der Kraftfahrzeugtür für die Verbesserung des Klangvolumens genutzt wird, während der Durchgang höherer Frequenzen insbesondere durch die Schlitze 12, 13 behindert wird.

In Verbindung mit der Anordnung eines Resonanzraumes 3 zur Verbesserung der Akustik im Innenraum eines Kraftfahrzeugs können Maßnahmen zur Verbesserung des Thermomanagements des geräuscherzeugenden elektromotorischen Aggregats 7 verbunden werden, die trotz der Anordnung des geräuscherzeugenden Aggregats 7 innerhalb der Soundbox 4 eine wirksame Kühlung des geräuscherzeugenden Aggregats 7 und damit dessen dauerhaft sicheren Betriebes gewährleisten.

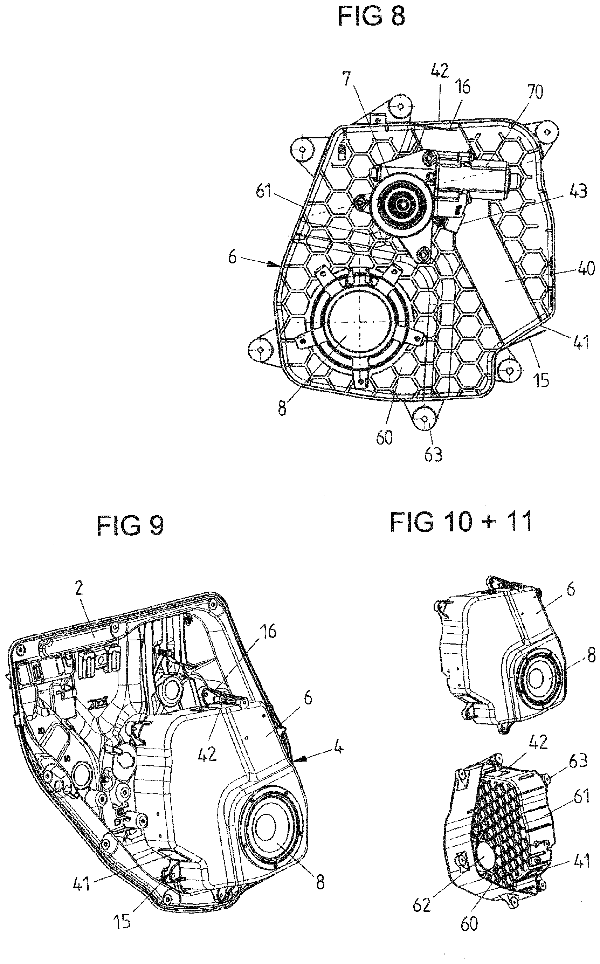

Dies kann sowohl durch eine tieffrequente Ansteuerung des Lautsprechers 8 im Infraschallbereich, insbesondere zwischen 1 bis 10 Hz, zur Erzeugung von Luftbewegung zur konvektiven Kühlung des geräuscherzeugenden Aggregats 7 als auch durch die in Fig. 8 dargestellten Mittel zur Erzeugung einer gerichteten Konvektionsströmung erzielt werden, innerhalb der das geräuscherzeugende Aggregat 7 positioniert ist. Fig. 8 zeigt in einer Draufsicht die zweite Gehäuseschale 6 der Soundbox 4 mit der Deckfläche 60, dem in die Deckfläche 60 eingesetzten Lautsprecher 8 und mit der umlaufenden Seitenfläche 61.

Zur Kühlung des geräuscherzeugenden Aggregats 7 ist ein Konvektionsströmungskanal 40 vorgesehen, durch den eine über eine erste oder Zuströmöffnung 41 zu einer zweiten oder Abströmöffnung 42 geführter Konvektionsstrom an dem wärmeabgebenden geräuscherzeugenden Aggregat 7 entlanggeführt wird. Sowohl die Zuströmöffnung 41 als auch die Abströmöffnung 42 können wahlweise durch Verschlusselemente 15, 16 in Form von Membranen oder Flatterventile verschlossen werden. Durch die Integration von Führungsrippen 43 in den Konvektionsströmungskanal 40 wird die Konventionsströmung gezielt am Poltopf 70 des als geräuscherzeugendes Aggregat vorgesehenen elektromotorischen Antriebs 7 vorbeigeführt, so dass die vom Poltopf 70 abgegebene Wärme über die Abströmöffnung 42 an die Umgebung der Soundbox 4 abgeführt wird. Dabei werden in der perspektivischen Darstellung der Soundbox 4 gemäß Fig. 9 sowie der perspektivischen Außenansicht der zweiten Gehäuseschale 6 gemäß Fig. 10 und der perspektivischen Innenansicht der zweiten Gehäuseschale 6 gemäß Fig. 11 die Verschlusselemente bzw. Ventile 15, 16 in einem definierten Infraschallbereich zwischen einer Auf- und Zuposition bewegt bzw. verstellt, wobei die Verschlusselemente 15, 16 oberhalb des Infraschall-Arbeitsbereichs aufgrund ihrer Eigenfrequenz bzw. Massenträgheit in ihren Verschlussstellungen verharren.

Um einen unerwünschten Austritt von Luftschall zu verhindern, der vom geräuscherzeugenden Aggregat 7 abgegeben wird, können die Verschlusselemente 15, 16 zusätzlich in Richtung ihrer Verschlussposition mittels elastischer Mittel, die insbesondere als integraler Bestandteil der Verschlusselemente 15, 16 ausgebildet sind, oder infolge der Schwerkraft vorgespannt werden.

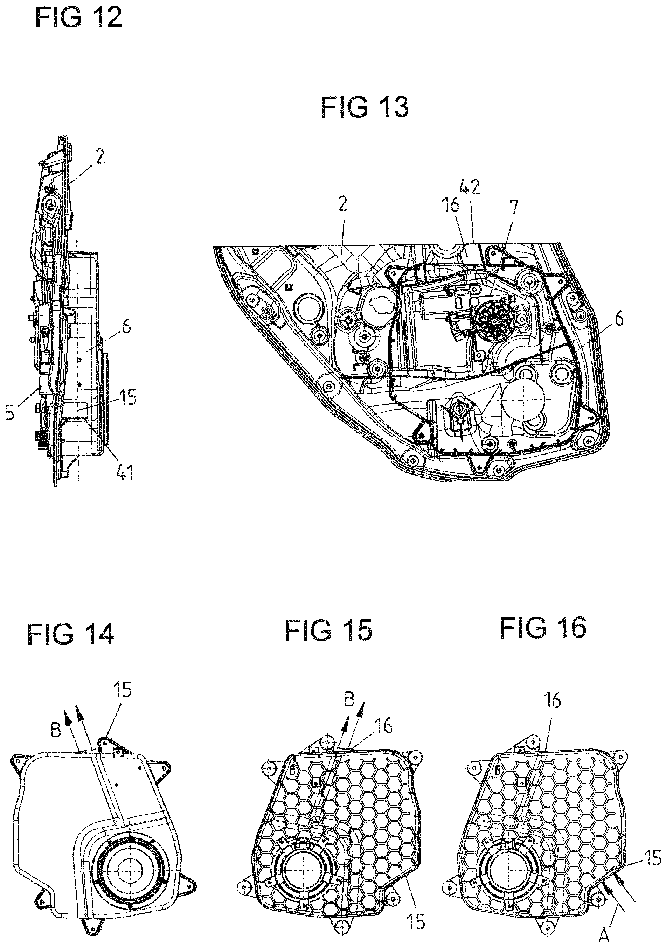

In den Fig. 12 bis 16 ist schematisch die Erzeugung der Konvektionsströmung zur Kühlung des geräuscherzeugenden Aggregats 7 dargestellt.

Die Fig. 12 und 13 zeigen in einer Seitenansicht und in einer schematischen Draufsicht auf ein Teil der Trägerplatte 2 mit darin eingezeichneten Umrissen der Soundbox 4 das an der ersten Öffnung oder Zuströmöffnung 41 angeordnete erste Verschlusselement 15 in Form einer Membran oder eines Flatterventils sowie das an der zweiten Öffnung oder Abströmöffnung 42 angeordnete zweite Verschlusselement 16, das ebenfalls als Membran oder Flatterventil ausgebildet ist. Bei dem in Fig. 13 dargestellten Zustand sind die Membranen bzw. Flatterventile 15, 16 zum Luftaustausch geschlossen, so dass keine Zirkulation der Luft entsteht. Durch die Anregung der Lautsprechermembran werden die Membrane oder Flatterventile 15, 16 synchron zum Luftaustausch rhythmisch geöffnet und geschlossen, so dass gemäß den Fig.14 bis 16 eine Zirkulation der Luft durch die Soundbox 4 hindurch entsteht. Dabei wird bei der Anregung der Lautsprechermembran zunächst das erste Verschlusselement 15 geöffnet, während das zweite Verschlusselement 16 geschlossen bleibt. Durch die Ausbildung eines Unterdrucks in der Soundbox 4 wird dann das zweite Verschlusselement 16 geöffnet, so dass die mit der Konvektionsströmung mitgeführte, vom geräuscherzeugenden Aggregat 7 abgegebene Wärme über die Abströmöffnung 42 an die Umgebung abgeführt wird.

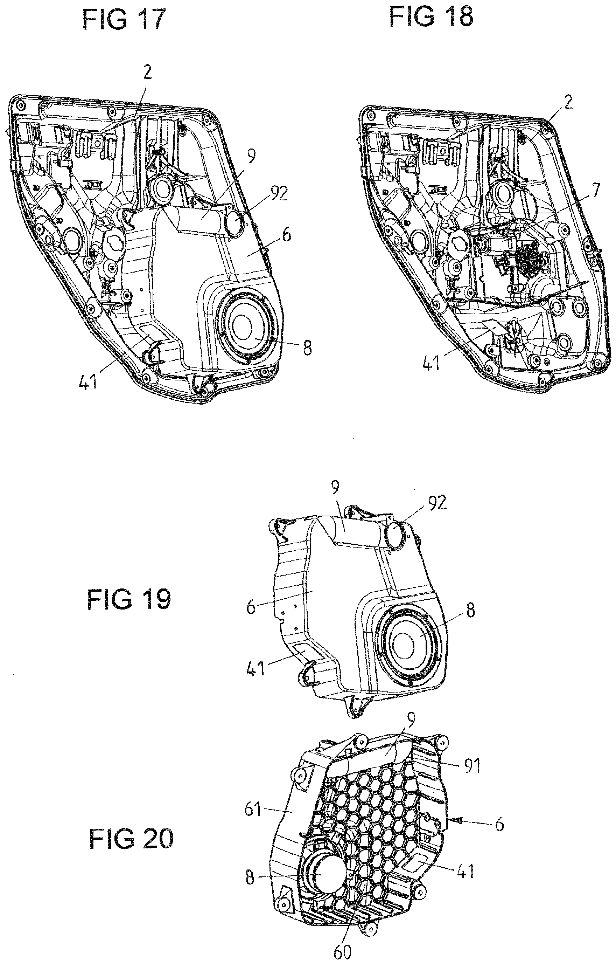

Zur weiteren Optimierung der Akustik im Innenraum eines Kraftfahrzeugs kann gemäß den Fig. 17 bis 20 die zweite Gehäuseschale 6 der Soundbox 4 mit einem Bassreflexrohr 9 versehen werden, das den Resonanzraum 3 im Innern der Soundbox 4 mit dem Außenraum verbindet. Zu diesem Zweck weist das Bassreflexrohr 9 eine in den Resonanzraum 3 gerichtete erste Reflexrohröffnung 91 und eine zum Trockenraum gerichtete zweite Reflexrohröffnung 92 auf. Zur ergänzenden Luftstromführung zur Erzeugung einer Konvektionsströmung kann weiterhin zumindest eine wahlweise durch eine Membran oder ein Flatterventil verschließbare, wahlweise als Zu- oder Abströmöffnung wirkende erste Öffnung 41 in der zweiten Gehäuseschale 6 vorgesehen werden, so dass zur konvektiven Kühlung das wärmeabgebende geräuscherzeugende Aggregat 7 im Bereich der Konvektionsströmung angeordnet ist, die entweder von der als Zuströmöffnung wirkenden ersten Öffnung 41 über die erste Reflexrohröffnung 91 des Bassreflexrohres 9 zur zweiten Reflexrohröffnung 92 des Bassreflexrohres 9 oder von der zweiten Reflexrohröffnung 92 über die erste Reflexrohröffnung 91 des Bassreflexrohres 9 zur ersten Öffnung 41 in der zweiten Gehäuseschale 6 der Soundbox 4 gerichtet ist.

In bevorzugter Ausführungsform ist das Bassreflexrohr 9 als Teslaventil ausgebildet, d.h. als passives, fluidisches Ventil mit einer gerichteten Luftströmung von der Außenöffnung zur Innenöffnung des Teslaventils und von dort über das geräuscherzeugende Aggregat 7 zur Abströmöffnung der Soundbox 4.

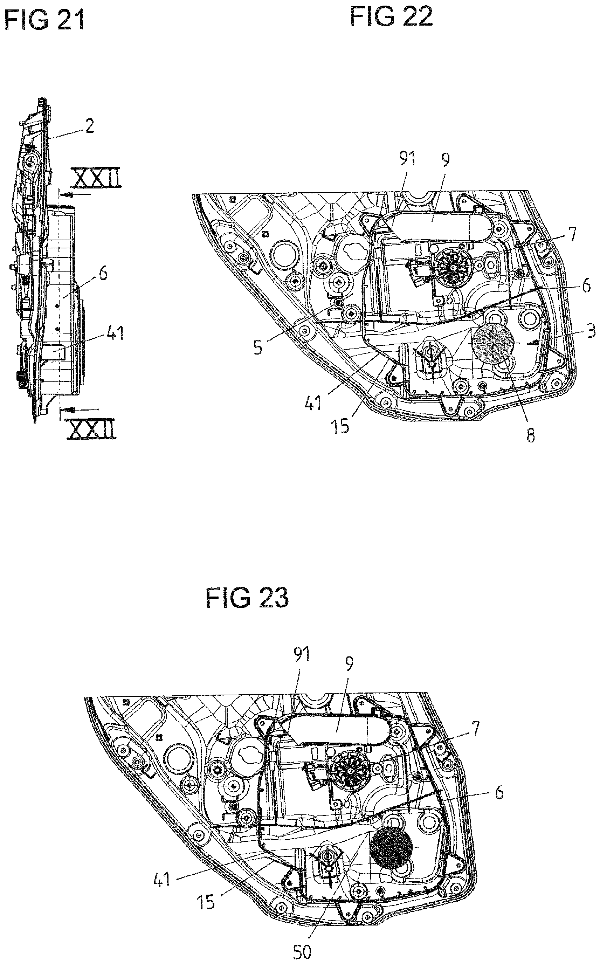

In den Fig. 21 bis 27 ist die Wirkung des Bassreflexrohres 9 zur Erzeugung einer Konvektionsströmung im Resonanzraum 3 näher dargestellt.

Bei dem in Fig. 22 in einem Schnitt entlang der Linie XXII-XXII der Seitenansicht gemäß Fig. 21 dargestellten Teil der Türinnenhaut bzw. Abdeckung 2 ist das die erste Öffnung 41 verschließende Ventil 15 geschlossen, so dass keine Luftzirkulation im Resonanzraum 3 entsteht. Bei dem in Fig. 23 dargestellten Zustand wird das Ventil 15 zum Luftaustausch durch die Pumpbewegung der Lautsprechermembran angeregt und dadurch periodisch geöffnet und geschlossen, so dass eine Luftzirkulation im Resonanzraum 3 entsteht.

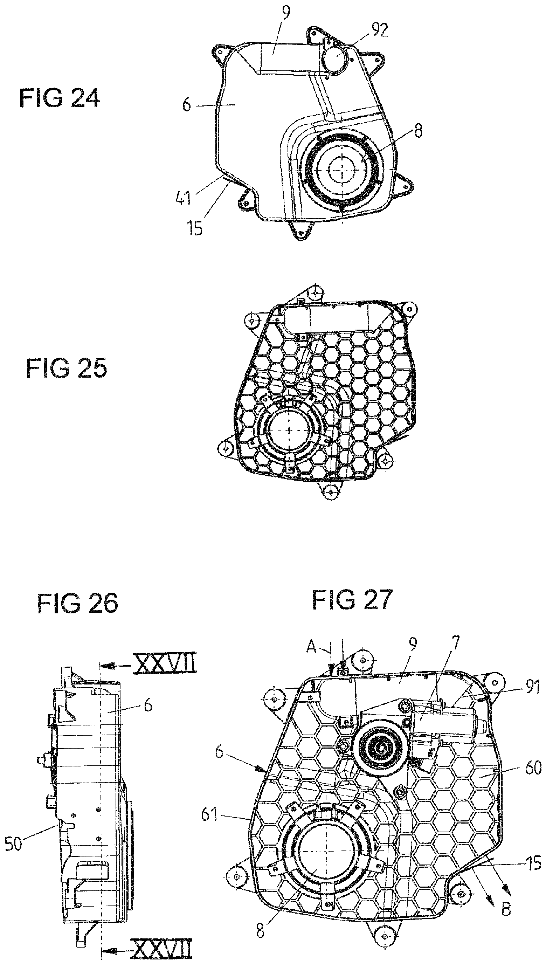

In den Fig. 24 bis 27 ist in verschiedenen Ansichten und in einem Längsschnitt entlang der Linie XXVII-XXVII gemäß Fig. 26 die Luftzirkulation im Resonanzraum 3 durch die nach außen gerichtete, als Zuströmöffnung für den Zustrom eines Kühlluftstromes A wirkende erste Reflexrohröffnung 91 des Bassreflexrohres 9 über die in den Resonanzraum 3 gerichtete, als Abströmöffnung wirkende zweite Reflexrohröffnung 92 zu der als Abströmöffnung wirkenden ersten Öffnung 41 in der zweiten Gehäuseschale 6 gerichtet, die durch ein Flatterventil 15 verschließbar ist und über die der erwärmte Luftstrom B abgeführt wird. Bei entsprechender Ausführung des Flatterventils 15 kann alternativ eine entgegen gerichtete Konvektionsströmung von der als Zuströmöffnung wirkenden ersten Öffnung 41 der zweiten Gehäuseschale 6 über die als Abströmöffnungen wirkende zweite Reflexrohröffnung 92 und erste Reflexrohröffnung 91 des Bassreflexrohres 9 geführt werden.

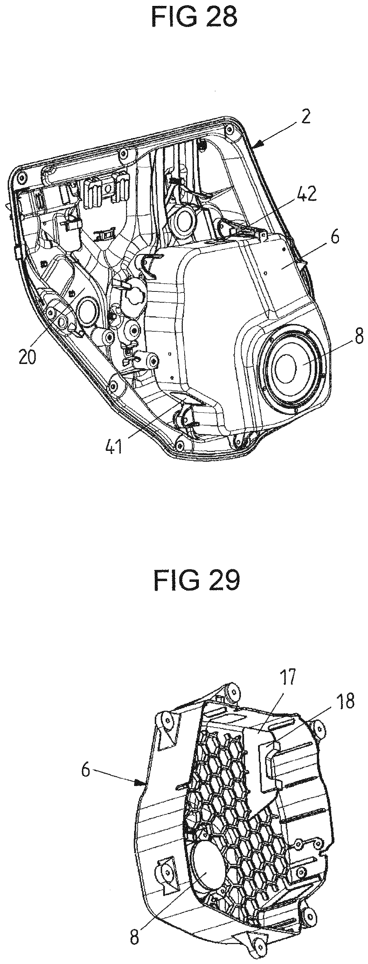

Da aus Gewichts- und Herstellungsgründen die Trägerplatte 2, insbesondere aber die als Deckel der Soundbox 4 dienende zweite Gehäuseschale 6 aus Kunststoff hergestellt werden, kann es erforderlich sein, zwischen der das geräuscherzeugende Aggregat 7 tragenden ersten Gehäuseschale 5 der Soundbox 4 und der den Lautsprecher 8 aufnehmenden zweiten Gehäuseschale 6 mechanische Bereiche oder Elemente zur Übertragung von Stützkräften bei Überschreitung vorgegebener Antriebskräfte vorzusehen. Als Beispiel für derartige mechanische Bereiche oder Elemente ist gemäß Fig. 29 eine im Innenraum der zweiten Gehäuseschale 6 angeordnete Stützrippe 17 vorgesehen, in die eine elastische Anbindung 18 eingesetzt ist.

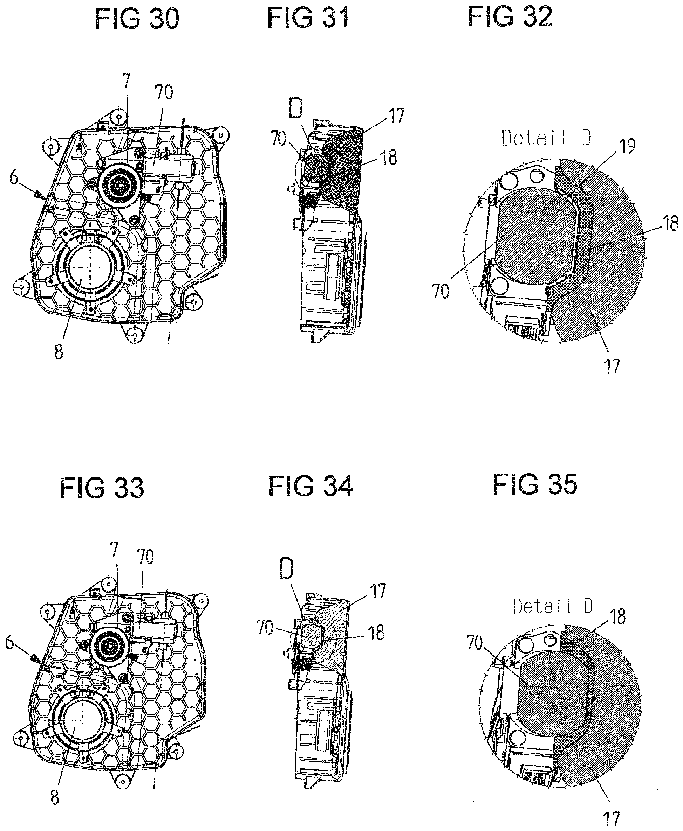

Entsprechend den schematischen Darstellungen der Fig. 30 bis 35 tritt die Stützrippe 17 in Eingriff mit dem Poltopf 70 eines elektromotorischen Antriebs 7 beim Überschreiten einer vorgegebenen Antriebskraft und leitet die Stützkraft an die zweite Gehäuseschale 6 zur Unterbindung einer weiteren Deformation bzw. Auslenkung des zur Dämpfung von Körperschallschwingungen vom Poltopf 70 zur zweiten Gehäuseschale 6 vorgesehenen elastischen Anbindungsbereiches 18 weiter.

Bei geringen Antriebskräfte, d.h. bei Unterschreiten der vorgegebenen Antriebskraft, ist zwischen dem Poltopf 70 und dem elastischen Anbindungsbereich 18 ein Spalt 19 ausgebildet, der die Übertragung von Körperschall vom Poltopf 70 zur zweiten Gehäuseschale 6 der Soundbox 4 verhindert.

**Bezugszeichenliste**

| | |
|---|---|
| 2 | Türinnenhaut oder Abdeckung |
| 3 | Resonanzraum |
| 4 | Soundbox (Resonanzraum-Gehäuse) |
| 5 | Erste Gehäuseschale |
| 6 | Zweite Gehäuseschale |
| 7 | Geräuscherzeugendes Aggregat (elektromotorischer Antrieb) |
| 8 | Lautsprecher |
| 9 | Bassreflexrohr |
| 10 | Akustikvlies |
| 11 | Befestigungsbereich |
| 12, 13 | Schlitze |
| 14 | Durchbruch, Ausschnitt |
| 15, 16 | Verschlusselement (Membran, Ventil) |
| 17 | Mechanische Bereiche oder Elemente (Stützrippe) |
| 18 | Elastischer Anbindungsbereich (Dämpfungselement) |
| 19 | Spalt |
| 20 | Bodenfläche der Türinnenhaut oder Abdeckung |
| 21 | Seitenwand der Türinnenhaut oder Abdeckung |
| 40 | Strömungskanal |
| 41 | Erste Öffnung (Zuströmöffnung) |
| 42 | Zweite Öffnung (Abströmöffnung) |
| 43 | Luftführungsrippen |
| 50 | Bodenfläche der ersten Gehäuseschale |
| 51 | Seitenwand der ersten Gehäuseschale |
| 60 | Deckfläche der zweiten Gehäuseschale |
| 61 | Seitenwand der zweiten Gehäuseschale |
| 62 | Öffnung zur Lautsprecheraufnahme |
| 63 | Soundboxbefestigungen |
| 70 | Elektromotor |
| 91 | Erste Reflexrohröffnung |
| 92 | Zweite Reflexrohröffnung |
| 170 | Aufnahme |

## Patentansprüche

1. Kraftfahrzeugtür mit einer Türaußenhaut und einer Türinnenhaut und/oder einer Abdeckung (2), zwischen denen ein Nassraum ausgebildet ist, und mit einer Türinnenverkleidung, zwischen der und der Türinnenhaut und/oder Abdeckung (2), insbesondere einer mit der Türinnenhaut verbundenen Trägerplatte eines Türmoduls, ein Trockenraum ausgebildet ist, in dem ein geräuscherzeugendes Aggregat (7), insbesondere ein elektromotorischer Antrieb eines Funktionselements der Kraftfahrzeugtür, ein Lautsprecher und ein im Wesentlichen geschlossener Resonanzraum (3) zur Aufnahme eines mit einer Wand des Resonanzraumes (3) verbundenen Lautsprechers (8) angeordnet sind, wobei zumindest der geräuscherzeugende Teil des geräuscherzeugenden Aggregats (7) ebenfalls im Resonanzraum (3) angeordnet ist
**dadurch gekennzeichnet,**
**dass** der Resonanzraum (3) von einer Soundbox (4) mit einer ersten Gehäuseschale (5), die Teil der Türinnenhaut oder der Abdeckung (2) ist, und einer den Lautsprecher (8) aufnehmenden, separat hergestellten und mit der ersten Gehäuseschale (5) verbindbaren, durch die Türinnenverkleidung (2) abgedeckten zweiten Gehäuseschale (6) umgeben ist

2. Kraftfahrzeugtür nach Anspruch 1, **dadurch gekennzeichnet, dass** in dem Resonanzraum (3) ein Akustikvlies (10) zur akustischen Dämpfung der vom geräuscherzeugenden Aggregat (7) abgegebenen Störgeräusche und zur akustischen Verbesserung der Klangqualität des Lautsprechers (8) durch eine virtuelle Volumenvergrößerung des Resonanzraumes (3) angeordnet ist.

3. Kraftfahrzeugtür nach Anspruch 1 oder 2, **dadurch gekennzeichnet, dass** der Lautsprecher (8) als Gegenschallquelle zum geräuscherzeugenden Aggregat (7) ausgebildet und ansteuerbar ist, wobei der Gegenschall in Bezug auf ein als elektromotorischer Antrieb ausgebildeten geräuscherzeugenden Aggregats (7) in einem Frequenzbereich von ca. 50 - 3.000 Hz generiert wird.

4. Kraftfahrzeugtür nach Anspruch 3, **dadurch gekennzeichnet, dass** der Lautsprecher (8) in einer Sensorfunktion, in der die auszulöschenden, von dem geräuscherzeugenden Aggregat (7) abgegebenen Frequenzen mit den zugehörigen Amplituden erfasst werden, und in einer Aktuatorfunktion aktivierbar ist, in der der Gegenschall vom Lautsprecher (8) abgestrahlt wird.

5. Kraftfahrzeugtür nach mindestens einem der vorangehenden Ansprüche, **dadurch gekennzeichnet, dass** der Lautsprecher (8) während des Betriebs des geräuscherzeugenden Aggregats (7) ein den Gesamtklang beeinflussendes, insbesondere überdeckendes oder ergänzendes, Tonsignalspektrum abgibt, das
- in Abhängigkeit von der Drehzahl des als elektromotorischer Antrieb ausgebildeten geräuscherzeugenden Aggregats (7),
- einem Sensorsignal, das das Frequenzspektrum und die Amplituden des vom elektromotorischer Antrieb (7) abgegebenen Störsignals erfasst,
- einem von einer Signaldatenbank insbesondere in Abhängigkeit von der Drehzahl des elektromotorischen Antriebs (7) abgerufenen Ansteuersignal oder
- von einem Signaldatengenerator, insbesondere einem Microcontroller, generierten Ansteuersignal
steuerbar ist.

6. Kraftfahrzeugtür nach mindestens einem der vorangehenden Ansprüche, **dadurch gekennzeichnet, dass** das geräuscherzeugende Aggregat (7) über Befestigungsbereiche (11) an der Türinnenhaut und/oder der Abdeckung (2) angebunden ist, die mit durch Polyurethanschaum verschlossenen Schlitzen (12, 13), Durchbrüchen oder Ausschnitten (14) versehen ist, die eine Weiterleitung des Körperschalls behindern oder dämpfen.

7. Kraftfahrzeugtür nach Anspruch 6, **dadurch gekennzeichnet, dass** die Schlitze (12, 13), Durchbrüche oder Ausschnitte (14) frequenzspezifisch derart ausgebildet sind, dass die für eine Soundbox (4) relevanten tiefen Tonfrequenzen zur Nutzung des Nassraums der Fahrzeugtür als Klangvolumen durchgelassen und der Durchgang höherer Tonfrequenzen zumindest behindert wird.

8. Kraftfahrzeugtür nach mindestens einem der vorangehenden Ansprüche, **dadurch gekennzeichnet, dass** zwischen der Türinnenhaut und/oder der Abdeckung (2) und der den Lautsprecher (8) aufnehmenden zweiten Gehäuseschale (6) der Soundbox (4) eine Stützrippe (17) zur Abstützung von Kräften angeordnet ist, die bei Überschreitung einer vorgegebenen Antriebskraft Stützkräfte überträgt und eine weitere Deformation bzw. Auslenkung des elastischen Anbindungsbereichs (18) des als elektromotorischer Antrieb ausgebildeten geräuscherzeugenden Aggregats (7) zumindest reduziert, wobei in einer mindestens einem Teil der Kontur des elektromotorischen Antriebs (8) angepassten Aufnahme (170) der Stützrippe (17) ein Dämpfungselement (18) eingelegt ist, zwischen dem und dem elektromotorischen Antrieb (8) bei unbelastetem elektromotorischen Antrieb (8) ein Spalt (19) ausgebildet ist, während bei Belastung des elektromotorischen Antriebs (8) die Kontur des elektromotorischen Antriebs (8) am Dämpfungselement (18) anliegt.

9. Kraftfahrzeugtür nach mindestens einem der vorangehenden Ansprüche, **gekennzeichnet durch** Mittel (9, 15, 16; 40 - 43; 91, 92) zur Erzeugung einer gerichteten Konvektionsströmung, innerhalb der das als elektromotorischer Antrieb ausgebildete geräuscherzeugende Aggregats (7) positioniert ist.

10. Kraftfahrzeugtür nach mindestens einem der vorangehenden Ansprüche, **dadurch gekennzeichnet, dass** der Lautsprecher (8) zur Abgabe tiefster Tonfrequenzen im Infraschallbereich, insbesondere im Bereich zwischen 1 und 10 Hz, zur Erzeugung von Luftbewegungen, insbesondere zur konvektiven Kühlung eines als elektromotorischer Antrieb ausgebildeten geräuscherzeugenden Aggregats (7) ansteuerbar ist.

11. Kraftfahrzeugtür nach mindestens einem der vorangehenden Ansprüche, **dadurch gekennzeichnet, dass** die Soundbox (4) eine als Zuströmöffnung ausgebildete erste Öffnung (41) und eine als Abströmöffnung ausgebildete zweite Öffnung (42) für die Konvektionsströmung bzw. für einen Luftaustausch mit der Umgebung des Resonanzraumes (3) aufweist, die durch Verschlusselemente (15, 16) abdeckbar sind, die in einem definierten Infraschall-Frequenzbereich zwischen einer Auf-/Zu-Position bewegbar bzw. verstellbar, oberhalb des Infraschall-Frequenzbereichs, insbesondere infolge ihrer Eigenfrequenz oder ihrer Massenträgheit, geschlossen und in Richtung ihrer Verschlusspositionen insbesondere durch als integraler Bestandteil der Verschlusselemente (15, 16) ausgebildete elastische Mittel oder infolge der Schwerkraft vorgespannt sind.

12. Kraftfahrzeugtür nach mindestens einem der vorangehenden Ansprüche, **dadurch gekennzeichnet, dass** in der zweiten Gehäuseschale (6) der Soundbox (4) ein den Resonanzraum mit dem den Resonanzraum (3) umgebenden Außenraum verbindendes Bassreflexrohr (9) angeordnet ist, das mindestens eine weitere als Zu- und/oder Abströmöffnung dienende Reflexrohröffnung (91, 92) aufweist und vorzugsweise als Teslaventil ausgebildet ist, und dass die Soundbox (4) mindestens eine weitere Zu- und/oder Abströmöffnung (41, 42) aufweist und das als elektromotorischer Antrieb ausgebildete geräuscherzeugende Aggregat (7) im Strömungsbereich der mindestens einen Reflexrohröffnung (91, 92) angeordnet ist.

13. Kraftfahrzeugtür nach Anspruch 1, **dadurch gekennzeichnet, dass** der Resonanzraum (3) derart abgedichtet ist, dass Luftschall aus dem Resonanzraum (3) ausschließlich über die Membran des Lautsprechers (8) austreten kann.

## Claims

1. A motor vehicle door with a door outer skin and a door inner skin and/or a cover (2), between which a wet space is formed, and with an interior door trim between which and the door inner skin and/or cover (2), in particular a carrier plate of a door module connected to the door inner skin, a dry space is formed, in which a noise generating assembly (7), in particular an electromotive drive of a functional element of the motor vehicle door, a loudspeaker and a substantially closed resonance space (3) for accommodating a loudspeaker (8) connected to a wall of the resonance space (3) are arranged, wherein at least the noise-generating part of the noise-generating assembly (7) likewise is arranged in the resonance space (3),
**characterized in**
**that** the resonance space (3) is surrounded by a soundbox (4) comprising a first housing shell (5), which is part of the door inner skin or the cover (2), and a second housing shell (6) covered by the interior door trim (2), which receives the loudspeaker (8), is manufactured separately and is connectable to the first housing shell (5).

2. The motor vehicle door according to claim 1, **characterized in that** in the resonance space (3) an acoustic fleece (10) is arranged for acoustically damping disturbing noises emitted by the noise-generating assembly (7) and for acoustically improving the sound quality of the loudspeaker (8) by a virtual increase in volume of the resonance space (3).

3. The motor vehicle door according to claim 1 or 2, **characterized in that** the loudspeaker (8) is configured and actuatable as a source of counter-sound to the noise-generating assembly (7), wherein the counter-sound is generated with respect to a noise-generating assembly (7) configured as an electromotive drive in a frequency range of about 50 - 3,000 Hz.

4. The motor vehicle door according to claim 3, **characterized in that** the loudspeaker (8) can be activated in a sensor function, in which the frequencies to be extinguished, which are emitted by the noise-generating assembly (7), are detected with the associated amplitudes, and in an actuator function in which the counter-sound is emitted by the loudspeaker (8).

5. The motor vehicle door according to at least one of the preceding claims, **characterized in that** during the operation of the noise-generating assembly (7) the loudspeaker (8) emits an audio signal spectrum influencing, in particular covering or supplementing, the overall sound, which is controllable in dependence on
- the rotational speed of the noise-generating assembly (7) configured as an electromotive drive,
- a sensor signal which detects the frequency spectrum and the amplitudes of the interfering signal emitted by the electromotive drive (7),
- an actuation signal retrieved from a signal database in particular in dependence on the rotational speed of the electromotive drive (7), or
- an actuation signal generated by a signal data generator, in particular a microcontroller.

6. The motor vehicle door according to at least one of the preceding claims, **characterized in that** via fixing areas (11) the noise-generating assembly (7) is connected to the door inner skin and/or the cover (2) which is provided with slots (12, 13) closed by polyurethane foam, apertures or cutouts (14) which impede or attenuate a transmission of the structure-borne sound.

7. The motor vehicle door according to claim 6, **characterized in that** in a frequency-specific respect the slots (12, 13), apertures or cutouts (14) are configured such that the low sound frequencies relevant for a soundbox (4) are transmitted in order to utilize the wet space of the vehicle door as a sound volume, and the passage of higher sound frequencies is at least impeded.

8. The motor vehicle door according to at least one of the preceding claims, **characterized in that** between the door inner skin and/or the cover (2) and the second housing shell (6) accommodating the loudspeaker (8) of the soundbox (4) a supporting rib (17) is arranged to support forces, which upon exceedance of a specified driving force transmits supporting forces and at least reduces a further deformation or deflection of the elastic connecting area (18) of the noise-generating assembly (7) configured as an electromotive drive, wherein in a receptacle (170) of the supporting rib (17) adapted to at least a part of the contour of the electromotive drive (8) a damping element (18) is inserted, between which and the electromotive drive (8) a gap (19) is formed when the electromotive drive (8) is not subjected to a load, whereas when the electromotive drive (8) is subjected to a load, the contour of the electromotive drive (8) rests against the damping element (18).

9. The motor vehicle door according to at least one of the preceding claims, **characterized by** means (9, 15, 16; 40-43; 91, 92) for generating a directed convection flow, within which the noise-generating assembly (7) configured as an electromotive drive is positioned.

10. The motor vehicle door according to at least one of the preceding claims, **characterized in that** the loudspeaker (8) can be actuated to emit lowest sound frequencies in the infrasound range, in particular in the range between 1 and 10 Hz, for generating air movements, in particular for the convective cooling of a noise-generating assembly (7) configured as an electromotive drive.

11. The motor vehicle door according to at least one of the preceding claims, **characterized in that** the soundbox (4) includes a first opening (41) configured as an inflow opening and a second opening (42) configured as an outflow opening for the convection flow or for an air exchange with the environment of the resonance space (3), which can be covered by closure elements (15, 16) which in a defined infrasound frequency range are movable or adjustable between an open/closed position, are closed above the infrasound frequency range, in particular as a result of their natural frequency or their mass inertia, and are pretensioned in the direction of their closed positions in particular by elastic means forming an integral part of the closure elements (15, 16) or as a result of gravity.

12. The motor vehicle door according to at least one of the preceding claims, **characterized in that** in the second housing shell (6) of the soundbox (4) a bass reflex tube (9) connecting the resonance space to the outer space surrounding the resonance space (3) is arranged, which includes at least one further reflex tube opening (91, 92) serving as an inflow and/or outflow opening and preferably is configured as a tesla valve, and that the soundbox (4) includes at least one further inflow and/or outflow opening (41, 42) and the noise-generating assembly (7) configured as an electromotive drive is arranged in the flow area of the at least one reflex tube opening (91, 92).

13. The motor vehicle door according to claim 1, **characterized in that** the resonance space (3) is sealed in such a way that airborne sound from the resonance space (3) can exit exclusively via the membrane of the loudspeaker (8).

## Revendications

1. Porte de véhicule automobile avec une peau extérieure de porte et une peau intérieure de porte et/ou un couvercle (2), entre lesquelles un espace humide est formé, et avec un revêtement intérieur de porte, entre lequel et la peau intérieure de porte et/ou le couvercle (2), en particulier une plaque de support d'un module de porte relié à la peau intérieure de porte, un espace sec est formé, dans lequel une unité génératrice de bruit (7), en particulier un entraînement électromoteur d'un élément fonctionnel de la porte de véhicule automobile, un haut-parleur et un espace de résonance (3) sensiblement fermé pour recevoir un haut-parleur (8) relié à une paroi de l'espace de résonance (3) sont agencés, au moins la partie génératrice de bruit de l'unité génératrice de bruit (7) étant également agencée dans l'espace de résonance (3),
**caractérisée en ce que**
l'espace de résonance (3) est entouré d'une caisse de résonance (4) avec une première coque de boîtier (5), qui fait partie de la peau intérieure de porte ou du couvercle (2), et d'une deuxième coque de boîtier (6) recouverte par le revêtement intérieur de porte, qui reçoit le haut-parleur (8), est fabriquée séparément et peut être reliée à la première coque de boîtier (5).

2. Porte de véhicule automobile selon la revendication 1, **caractérisée en ce qu'**un voile acoustique (10) est agencé dans l'espace de résonance (3) pour l'amortissement acoustique des bruits perturbateurs émis par l'unité génératrice de bruit (7) et pour l'amélioration acoustique de la qualité sonore du haut-parleur (8) au moyen d'une augmentation virtuelle du volume de l'espace de résonance (3).

3. Porte de véhicule automobile selon la revendication 1 ou 2, **caractérisée en ce que** le haut-parleur (8) est conçu et peut être actionné comme source de contre-bruit par rapport à l'unité génératrice de bruit (7), le contre-bruit étant généré dans une gamme de fréquences d'environ 50 à 3000 Hz par rapport à une unité génératrice de bruit (7) conçue comme entraînement électromoteur.

4. Porte de véhicule automobile selon la revendication 3, **caractérisée en ce que** le haut-parleur (8) peut être activé dans une fonction de capteur dans laquelle les fréquences à annuler, qui sont émises par l'unité génératrice de bruit (7), sont détectées avec les amplitudes associées, et dans une fonction d'actionneur dans laquelle le contre-bruit est émis par le haut-parleur (8).

5. Porte de véhicule automobile selon au moins l'une des revendications précédentes, **caractérisée en ce que** le haut-parleur (8), pendant le fonctionnement de l'unité génératrice de bruit (7), émet un spectre de signaux sonores qui influence le son en général, en particulier le recouvre ou le complète, et qui peut être commandé
- en dépendance de la vitesse de rotation de l'unité génératrice de bruit (7) conçue comme entraînement électromoteur,
- en dépendance d'un signal de capteur qui détecte le spectre de fréquences et les amplitudes du signal brouilleur émis par l'entraînement électromoteur (7),
- en dépendance d'un signal d'actionnement extrait d'une base de données de signaux, en particulier en dépendance de la vitesse de rotation de l'entraînement électromoteur (7), ou
- par un signal d'actionnement généré par un générateur de données de signal, en particulier par un microcontrôleur.

6. Porte de véhicule automobile selon au moins l'une des revendications précédentes, **caractérisée en ce que** l'unité génératrice de bruit (7) est reliée à la peau intérieure de porte et/ou au couvercle (2) par des zones de fixation (11), qui sont pourvues de fentes (12, 13) fermées par de la mousse de polyuréthane, d'ouvertures ou de découpes (14), qui empêchent ou atténuent la transmission du bruit structurel.

7. Porte de véhicule automobile selon la revendication 6, **caractérisée en ce que** les fentes (12, 13), ouvertures ou découpes (14) sont conçues de manière spécifique aux fréquences de telle sorte que les basses fréquences sonores pertinentes pour une caisse de résonance (4) puissent passer pour utiliser l'espace humide de la porte de véhicule comme volume sonore et que le passage des fréquences sonores plus élevées soit au moins empêché.

8. Porte de véhicule automobile selon au moins l'une des revendications précédentes, **caractérisée en ce qu'**entre la peau intérieure de porte et/ou le couvercle (2) et la deuxième coque de boîtier (6) de la caisse de résonance (4) recevant le haut-parleur (8) une nervure d'appui (17) pour supporter des forces est agencée, qui transmet des forces d'appui lorsqu'une force d'entraînement prédéterminée est dépassée et au moins réduit une déformation ou déviation supplémentaire de la zone de liaison élastique (18) de l'unité génératrice de bruit (7) conçue comme entraînement électromoteur, un élément d'amortissement (18) étant inséré dans un logement (170) de la nervure d'appui (17) adapté au moins en partie au contour de l'entraînement électromoteur (7), entre lequel et l'entraînement électromoteur (7), un espace (19) se forme lorsque l'entraînement électromoteur (7) n'est pas chargé, tandis que lorsque l'entraînement électromoteur (7) est chargé, le contour de l'entraînement électromoteur (7) repose contre l'élément d'amortissement (18).

9. Porte de véhicule automobile selon au moins une des revendications précédentes, **caractérisée par** des moyens (9, 15, 16 ; 40 - 43 ; 91, 92) pour générer un flux de convection dirigé, à l'intérieur duquel il est positionnée l'unité génératrice de bruit (7) conçue comme entraînement électromoteur.

10. Porte de véhicule automobile selon au moins l'une des revendications précédentes, **caractérisée en ce que** le haut-parleur (8) peut être actionné pour émettre les fréquences sonores les plus basses dans la gamme des infrasons, en particulier dans la gamme comprise entre 1 et 10 Hz, pour générer des mouvements d'air, en particulier pour le refroidissement par convection d'une unité génératrice de bruit (7) conçue comme entraînement électromoteur.

11. Porte de véhicule automobile selon au moins l'une des revendications précédentes, **caractérisée en ce que** la caisse de résonance (4) présente une première ouverture (41) conçue comme ouverture d'admission et une deuxième ouverture (42) conçue comme ouverture de sortie pour le flux de convection ou pour un échange d'air avec l'environnement de l'espace de résonance (3), qui peuvent être recouvertes par des éléments de fermeture (15, 16) qui peuvent être déplacés ou ajustés dans une gamme de fréquences infrasonores définie entre une position ouverte/fermée, sont fermés au-dessus de la gamme de fréquences infrasonores, en particulier en raison de leur fréquence propre ou de leur inertie de masse, et sont précontraints en direction de leurs positions de fermeture, en particulier par des moyens élastiques formés comme partie intégrante des éléments de fermeture (15, 16) ou en raison de la gravité.

12. Porte de véhicule automobile selon au moins l'une des revendications précédentes, **caractérisée en ce que** dans la deuxième coque de boîtier (6) de la caisse de résonance (4) il est agencé un tube bass-reflex (9) reliant l'espace de résonance à l'espace extérieur entourant l'espace de résonance (3), qui présente au moins une autre ouverture de tube reflex (91, 92) servant d'ouverture d'admission et/ou de sortie et est de préférence conçu comme une soupape Tesla, et **en ce que** la caisse de résonance (4) présente au moins une autre ouverture d'admission et/ou de sortie (41, 42) et l'unité génératrice de bruit (7) conçue comme entraînement électromoteur est agencée dans la zone d'écoulement de la au moins une ouverture de tube reflex (91, 92).

13. Porte de véhicule automobile selon la revendication 1, **caractérisée en ce que** l'espace de résonance (3) est scellée de telle manière que le bruit aérien peut sortir de l'espace de résonance (3) exclusivement par la membrane du haut-parleur (8).
